# EUROPEAN PATENT SPECIFICATION

(11) **EP 1 090 076 B1**
(45) Date of publication and mention of the grant of the patent: **08.02.2006**
(21) Application number: 99930663.2
(22) Date of filing: 23.06.1999
(51) Int. Cl.: C09C 1/42, C09C 3/04

(54) **CALCINED KAOLIN PIGMENTS AND BLENDS AND THE METHOD FOR MANUFACTURING THE SAME FROM MILL WASTE**
KALCINIERTE KAOLINPIGMENTE UND MISCHUNGEN UND VERFAHREN ZU DESSEN HERSTELLUNG AUS ABFALLSCHLAMM DER PAPIERINDUSTRIE
PIGMENTS DE KAOLIN CALCINES ET LEURS MELANGES ET PROCEDES DE PRODUCTION A PARTIR DE DECHETS D'USINE

(30) Priority: 23.06.1998 US 102856
(43) Date of publication of application: 11.04.2001
(73) Proprietor: Ginn, Michael W., Sandersville, GA 31082 (US)
(72) Inventor: Ginn, Michael W., Sandersville, GA 31082 (US)
(74) Representative: Jones, Keith William
(86) International application number: PCT/US1999/014314
(87) International publication number: WO 1999/067335

(56) References cited:
- US-A- 3 586 523
- US-A- 3 765 921
- US-A- 3 798 044
- US-A- 4 678 517
- US-A- 4 781 298
- US-A- 5 328 506

## Description

### FIELD OF THE INVENTION

The invention generally relates to calcined or thermally processed clay products and more specifically to a calcined kaolin pigment and to an improved method for manufacturing the same and blends thereof. More particularly, the method involves an innovative combination of a series of generally known processing steps to efficiently manufacture thermally processed kaolin having both higher scatter and brightness, and improved retention, abrasion, and bulk. The Pyroflex Pigment (or Product) Recovery System (PPRS) is a pigment and product calcination system using state -of-the-art thermal processing technology for manufacturing low-cost and value-added pigments in proximity to the end user. By definition, this system is an axiomatic manufacturing concept that integrates a paper mill processing waste as a raw material source with advanced thermal processing and pigment calcination. By proper system design and operation, pigments are produced with the highest inherent quality and optical properties at the least cost

### BACKGROUND OF THE INVENTION

In the course of manufacturing paper and similar products, including paper board and the like, it is common and well known to incorporate quantities of inorganic materials into the fibrous web in order to improve the quality of the resulting product. A number of inorganic materials, such as titanium dioxide, have long been known to be effective for these purposes. These materials can be incorporated into the paper in the form of anatase or rutile. Titanium dioxide, however, is among the most expensive materials which can be used. Accordingly, in recent years, considerable efforts have been made to develop satisfactory replacements for the said titanium dioxide.

Titanium dioxide is recognized as providing the maximum brightness and opacity development of all commercially available pigments. However, it is also the most expensive commercially available pigment. As a result, paper and paint manufacturers are continually looking for means to optimize their use of expensive titanium dioxide while still achieving their quality targets. Based on their superior optical properties, calcined kaolins have proven to be very effective titanium dioxide extenders and have enjoyed wide acceptance in the paper, paint, and plastics industries. Among the materials which have found increasing acceptance as paper fillers are substantially anhydrous kaolin clays. Materials of this type are generally prepared by partially or fully calcining a crude kaolin clay, which may have been subjected to prior beneficiation steps in order to remove certain impurities (e.g. for the purpose of improving brightness in the ultimate product). It is important for an understanding of the present invention, to recognize that those skilled in the art of kaolin processing draw a sharp and fundamental distinction between calcined and uncalcined kaolins With respect to terminology, it is noted that the prior art literature, including numerous of the prior art patents relating to the field of kaolin products and processing, often uses the term "hydrous" to refer to a kaolin which has not been subjected to calcination-more specifically, one that has not been heated to temperatures above about 450 Degrees C. Such temperatures serve to alter the basic crystal structure of kaolin. These so-called "hydrous" clays may have been produced from crude kaolins, which have been subjected to various operations of beneficiation( for example: froth flotation, magnetic separation, mechanical delamination, grinding, or comminution), but not to such heating as would impair the crystal structure.

In an accurate technical sense, the description of these materials as "hydrous" is , however, incorrect. More specifically, there is no molecular water actually present in the kaolinite structure. Thus, although the composition can be, and often is, arbitrarily written in the form

2*H*₂*O*•*Al*₂*O*_{*3*}•2*SiO*₂,

it is now well-known that kaolinite is an aluminum hydroxide silicate of approximate composition

*Al*_{*2*}(*OH*)_{*4*}*Si*_{*2*}*O*_{*5*},

--which equated to the hydrated formula just cited. Once the kaolin is subjected to calcination, which, for the purposes of this specification means being subjected to heating of 450 Degrees C or higher for a period which eliminates the hydroxyl groups, the crystalline structure of the kaolinite is destroyed. As used in this specification, the term "calcined kaolin" shall refer to such kaolin. Preferably the calcined kaolin has been heated above the 980 Degree C exotherm, and therefore is "fully calcined", as opposed to having been rendered merely a "metakaolin".

Reference may be had in the forgoing connection to *Proctor:* U. S. Pat. No. 3,014,836 and to *Fanselow et al:* 3,586,823, which disclosures are representative of portions of the prior art pertinent to fully calcined kaolins. A common calcined product is described in U. S. Pat. No. 4,381,948 to *McConnell et al.* As used herein, the term "thermally processed" refers to any thermal or hydrothermal processing (whether or not, but of course including) producing a metakaolin or a calcined product. Thermal processing as employed in the present invention is designed to maximize brightness, bulk and opacity at the least cost by thermally structuring the raw material on-site or adjacent the end user.

Calcined kaolin presently is manufactured by a series of steps including extractive mining, and then hydrous processing and calcining at a manufacturing site in proximity to the mining/hydrous manufacturing operation. This is followed by distribution, from the manufacturing site to the customer or end user who performs further "end use" processing steps, such as makedown and screening. Presently, the milled kaolin is calcined and then transported in large bulk transport containers, such as specially constructed railroad sparger cars, to the end user. Because the calcined kaolin is substantially dry, fluffy, powdery, low bulk density, hard to handle substance, intermediate steps, between calcination and transport, are required to render it transportable.

For example, see U.S. Pat. Nos 4,561,597 and 4,593,860 to *Cook et al.* which teach ball milling calcined kaolin prior to its transport.

One of the most difficult problems faced when providing calcined kaolin to the end use customer is that the product is extremely difficult to unload from the large transport bulk containers which are used to deliver the product to the paper mill or other end user. The solids to liquid concentration of the product as stored in the transport vehicle usually is less than about 5%. Typically, unloading is accomplished by mixing water with the powdered calcined kaolin while in the transport vehicle, a process known as "sparging", and then unloading this resulting slurry by pressurizing the transport vehicle. A problem with this type of unloading process is that to unload the transport bulk containers a slurry of about 35% solids must be created in the storage vehicle. This consistency is adequate for paper filling applications; however, the desired consistency of the slurry for paper coating applications is about 60-65% solids. Therefore, to create a 60-65% solids slurry, the work product, after having been diluted to about 35% and unloaded from the transport vehicle, must be concentrated, which is a difficult and relatively expensive procedure.

Another disadvantage of the presently used method is that in some manufacturing processes, such as slurry transport, chemicals such as dispersants, biocides and thickening agents must be added at the manufacturing site to the calcined kaolin (1) so that it has sufficient flow properties, less bacterial degradation, less settling, and can be "poured from storage and transported to the paper mill or other end user, and (2) so that it can be pneumatically removed from the bulk transport container after "wet out" and sparging and deposited in a storage container at the end user's site.

The extra steps required to prepare the calcined kaolin for transport and "wet out", such as milling and ball-milling, reduce the brightness and scatter, increase the abrasion, and increase the cost of manufacturing the calcined kaolin. The addition of dispersants and other additives also raises the production cost of calcined kaolin and decreases the zeta potential, and therefore reduces performance such as retention in paper making.

Improvements of calcined products, often with regard to abrasivity and opacity, have long been sought, see for example 4,014,709 with regard to the use of by-products; 4,678,517 with regard to the use auxiliary energy sources; 4,830,673 with regard to the use of additives; and 5,074,475 with regard to process modifications such as the employment of spray drying.

Areas of particular interest in these regards have been selective classification, see for example 4,381,948; 5,011,534; and 5,137,574; and in the area of milling, see for example, 4,561,597; 4,593,860; 4,693,427; and 5,261,956.

While there have been attempts to use the sludge of paper and pulp mills and the like from news paper plants, the prior efforts have been largely directed to using the heat value of such sludges or to using their ash content. In some cases the sludge has been used to form sandblasting grit, roof shingle granules, or as an additive to concrete or other paving materials.

Kinstrey, R.B. in a major peer reviewed TAPPI Journal article of Dec. 1993(v.79,no.12 p128-134) concluded that " It is possible to design a closed cycle deinking facility, although the costs are high."

Dorica, J. and Simandl, J. In a case study found in the TAPPI Jor. V.78, no. 5, p. 109-116;of May 1995 proposed four alterantives for seperating fiber and ash components in deinking effluents-namely 1) a two-stage screening, 2) a floatation process ,3) a screening with centrifugation and 4) a floation, screening centrifugation process. In all cases the centrifugation cake is landfilled.

Frederick, W. J. Et al in a peer reviewed entry found in v. 79, no. 6 TAPPI Jor. of June 1996,p.123-131 in considering 'Energy and Materials Recovery from Recycled Paper Sludge" noted "...material contains a significant fraction of clay, [calcium carbonate, titanium dioxide, printing inks, and other additives] that are not recyclable."

While the study developed a low to medium heating value fuel gas, it concluded the ash did not even meet ASTM standards for use as a mineral admixture for Portland cement.

Other articles outlining the state of the prior art are:
Glenn, J. *Paper Mill Sludge Feedstock for Tomorrow,* Progress in Paper Recycling, Vol. 7, No.3, May 1998 at pg.54.
MaCutcheon. *et al*., *Semiannual Palents Review -* July-December 1997, Progress in Paper Recycling, Vol. 7, No.3, May 1998 at pg.67.
Engel, P. *et al*. *Recycled Mills Seek Options To Turn Deinking Residuals into Resources,* Pulp and Paper April 1998 at 83

### OBJECTS OF THE INVENTION

Pursuant to the foregoing, it may be regarded as an object of the present invention, to provide a process for the production of calcined kaolin clay and other thermally treated clay products and blends, as to provide a product which is highly useful and economical. It is a further object of the present invention, to provide a process of the foregoing character, which may be readily carried out with comparatively simple equipment and with relatively simple engineering requirements. A still further object of the present invention is to provide a process of improved efficiency to produce a product with improved properties and performance. A further object of the present invention is to provide a method to usefully process paper and pulp waste sludge to provide useful products and pigments.

### SUMMARY OF THE INVENTION

With these objects in mind, this invention provides a thermally processed kaolin clay pigment product as set forth in claim 1, and a method of producing a thermally processed kaolin clay pigment product as set forth in claim 4. Preferred embodiments of the invention are disclosed in dependent claims 2 to 3 and 5 to 11.

Thus, methods embodying the present invention can provide a calcined kaolin with better brightness and scatter, and improved abrasion, more efficiently and at a lower cost. The method may comprise the steps of transporting dried pre-calcined kaolin to the end-user, milling the pre-calcined material, calcining the kaolin and then either storing the calcined clay or transferring it directly to a makedown tank. The method need not require the steps of floatation, milling and ball or impact milling after the calcination process at the manufacturing site, eliminates additional storage requirements and results in an improved calcined product in terms of brightness, and scatter, and subsequent performance such as retention of the pigment. In addition, an improved method of calcination is provided which comprises passing the processed pre-calcined clay through an indirect rotary calciner at the site of the end use. This type of calciner is an improvement because over-calcination is reduced, higher yields are obtained, and a less abrasive, less costly calcined product results. The Pyroflex Pigment Recovery System is a system in which thermal engineering is employed in the production, recovery and design of pigment and product designs from paper mill processing wastes.

The Pyroflex Pigment (or Product) Recovery System (PPRS) is a pigment and product calcination system using state -of-the-art thermal processing technology for manufacturing low-cost and value-added pigments in proximity to the end user. By definition, this system is an axiomatic manufacturing concept that integrates a paper mill processing waste as a raw material source with advanced thermal processing and pigment calcination. By proper system design and operation, pigments are produced with the highest inherent quality and optical properties at the least cost

### BRIEF DESCRIPTION OF THE DRAWINGS

In the drawings appended hereto:
Figure 1 is a schematic diagram of the conventional method of production and delivery of calcined kaolin.
Figure 2 is a schematic diagram of the improved method of production and delivery of calcined kaolin.
Figure 3 illustrates brightness and abrasion values for certain products of the present invention.
Figure 4 illustrates brightness and abrasion values for certain products of the present invention.
Figure 5 illustrates abrasion values for products of the present invention.
Figure 6 illustrates the relative abrasion values of high and low brightness products of the present invention compared with two common and well known prior art products.
Figure 7 is a schematic flowsheet diagram of the present invention as applied in paper filler production.
Figure 8 is a schematic flowsheet diagram of the present invention as applied in the production of paper coating pigments.
Figure 9 is a schematic flowsheet diagram of a non-carbonate model of the present invention.
Figure 10 is a schematic flowsheet diagram of a Type I process for use on slurries and sludges containing aluminum silicates, titanium dioxide and/or calcium carbonates.
Figure 11 is a schematic flowsheet diagram of a Type II process for use on slurries and sludges containing aluminum silicates, titanium dioxide, and/or calcium carbonates.
Figure 12 is a schematic flowsheet diagram of a Type III process for use on slurries and sludges containing aluminum silicates, titanium dioxide, and/or calcium carbonates.
Figure 13 is a schematic flowsheet diagram for comparing the processes of Figures 9-12.
Figure 14 is a summary flowsheet of the Pyroflex Pigment/Product Recovery System
Figure 15 shows brightness as a function of temperature in a paper sludge recovery.
Figure 16 shows the loss on ignition as a function of temperature in a paper sludge recovery
Figure 17 shows abrasion as a function of temperature in a paper sludge recovery
Figure 18 shows brightness as a function of temperature in a newsprint sludge treatment.
Figure 19 shows the loss on ignition as a function of temperature in a newsprint sludge treatment.
Figure 20 shows abrasion as a function of temperature in a newsprint sludge treatment

### DETAILED DESCRIPTION OF THE PREFERRED EMBODIMENTS

In the present invention, mined pre-calcined kaolin is initially subjected to processes which are generally well known in the art of clay processing as unit operations, *per se,* and which are intended to remove undesired impurities from the clay. One such process is a dry processing technique, known as air floatation processing. Wet processing techniques of various types can also be employed such as the well known techniques of froth flotation, reductive and oxidative bleaching, and high intensity magnetic separation. The pre-calcined kaolin so processed is then dried at the manufacturing plant such as by spray drying or by other means. These processes are all well known in the art. See for example, U.S. Patent No. 5,213,687 to *Ginn et al.* Detailed discussions of calcined clays and their methods of preparation can be found in numerous prior art patents. For example, see U.S. Patent Nos. 5,223,155 to *Ginn et al*.; 3,014,836 to *Proctor, Jr*.; 3,586,523 to *Fanselow et al*.; 4,381,948 to *McConnell et al*. and 5,022,924 to *Raythatha et al*.; the disclosures of which are incorporated herein by reference.

After the work product has been wet and/or dry processed and dried at the manufacturing site, the dried pre-calcined kaolin is loaded into a large conventional transport vehicle and is transported to the end-use site, such as a customer on-site mini-processing facility or a mini-processing site in immediate proximity to the customer site. The dried, but not yet calcined, kaolin has the consistency of micron sized beads and has better flow characteristics than calcined material which is powdery and fluffy, The pre-calcined material also is more dense, at about 40-60 pounds per cubic foot versus 15 pounds per cubic foot for the calcined product. Therefore, the pre-calcined material is significantly easier and cheaper to transport.

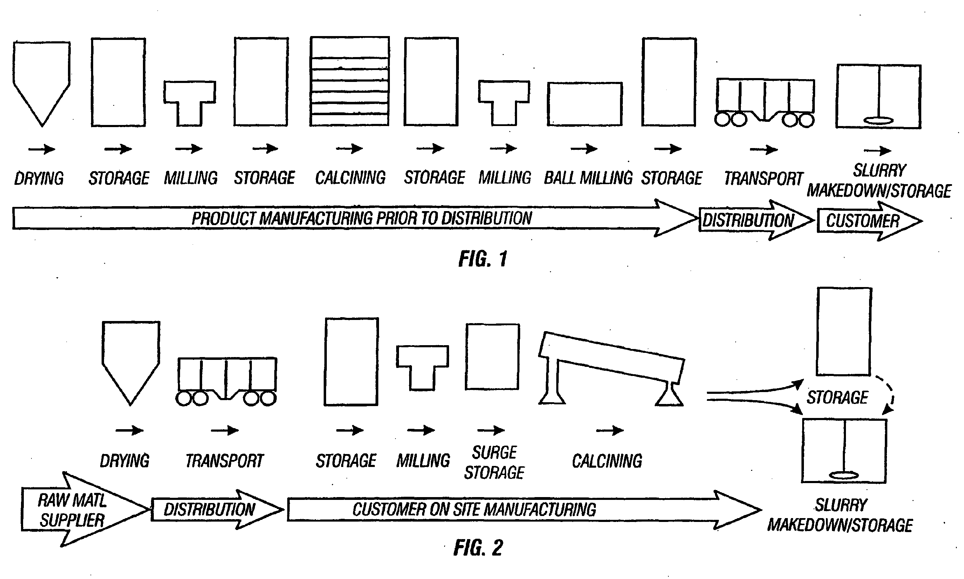

As shown in **Figure 1**, conventionally the kaolin is transported after it is calcined. However, because the calcined product has poor flow properties, the steps of milling and ball milling usually are required before the calcined clay can be loaded in a bulk transport container, transported, and unloaded at the end use site. These procedures are carried out on the calcined kaolin and reduce the scatter and brightness of the calcined kaolin and can increase its abrasiveness.

In the present invention, as shown in **Figure 2**, the dried pre-calcined kaolin is not milled or ball milled before being transported, but is transported from the mine/hydrous processing site to the calcine processing site which is located either at the end user's manufacturing facility or at a kaolin mini-processing site adjacent to the end user's manufacturing facility. At the kaolin processing site of the end user or on-site mini-processor, the dried pre-calcined kaolin can undergo a variety of milling processes, perhaps accompanied by additions of various additives such as ethylene glycol as in U.S. Patent No. 4,830,6'73 to *Jones et al.* or silica as in U.S. Patent No.5,022,924 to *Raythatha et al.* This step of milling at the end user's facility breaks up the pre-calcined kaolin into smaller particles suitable for undergoing calcination.

The calcination step is also carried out at the kaolin processing site of the end user or on-site mini-processor and is preferably carried out using an indirect rotary calciner such as, for example, that disclosed in U.S. Patent No. 3,383,438 to *Allegrini et al.* Indirect rotary calciners have a pulse burner system that gives good control of the thermal treatment, fusion, or calcination process and reduces over calcination of the clay particles. In addition, there is no "dead bed", a stagnant area in the calciner, which has been shown to lead to over calcination because of contamination of the product flow with once calcined particles--i.e. particles which have already been fully or partially calcined. Furthermore, there is no high air flow contacting the once calcined product and reintroducing this product along with collected dust to the inlet flow of the calciner. The reduction in"over-calcination" leads to lower abrasiveness of the calcined product. Also, the use of the indirect rotary calciner leads to calcined product recoveries of about 84% compared to about 72% with prior art methods of calcination such as the vertical Hereshoff calciner or direct rotary calciners. However, the method of the invention does not necessarily require nor is it limited to the use of an indirect rotary calciner, but direct rotary calciners or Hereshoff calciners may be used. Indirect rotary calciners are not commercially used for calcining kaolin because they usually do not operate as efficiently as the larger calciners where large scale processing is required for calcination in proximity to the mining/hydrous processing site. However, because the present invention allows for smaller, batch processing, at the end use site, the advantages of the smaller indirect rotary calciner can be realized.

The prior art taught process of indirect rotary calcination is improved upon in the present invention. For example, some aspects of indirect rotary calciners that are taught in *Energy Conservation* Innovations for Indirectly-Heated Rotary Calciners by David W. Dohlstrom, in *Chemical Engineering Progress*, November 1985, and in the ABB Raymond, Inc. Bulletin No. 873R on rotary thermal processing equipment and systems are incorporated in the present method. For example, this process takes advantage of the indirect rotary calciner for smaller scale processors. Also, the smaller indirect calciner can be practically shut down more frequently and restarted because of the smaller mass of equipment and refractory to change temperature. Also, better control of the temperature of the calcining process within the calciner can be maintained because of the burner system.

After calcination at the end user's site, the kaolin is transferred to a storage tank or transferred directly to a slurry makedown tank. Because the calcined product does not have to go through "wet out" from a transport container, it can be made into a slurry having greater than 35% solids, even up to 50-65% solids which is suitable for paper coating applications. The calcination and slurry makedown can be a continuous process wherein the calcined kaolin is pneumatically conveyed directly from the calciner to the makedown tank.
In this way, the problems associated with having to "wet out" the calcined kaolin to remove it from a large transport container are avoided.

The process and calciner operating parameters can be changed to give a product having properties desired for a specific application. For example, kaolin used for paper filler requires a particle size of about 0.5-1.5 microns, a brightness of about 91-93 O.E. Brightness, and a 35% slurry. These properties can be achieved by using appropriate milling, a calcining temperature of about 1700-1850 Degrees F and appropriate slurry makedown. On the other hand, a calcined kaolin customized for newsprint requires a particle size of about 1-3 microns, brightness of about 78-82 G. E. Brightness, and a 35% slurry and can be achieved using different milling conditions and a calcining temperature of about 1400-1500 Degrees F.

An important aspect of the present inventive method is that after calcination, the calcined kaolin can be immediately used by the customer or it may be stored. Importantly, it does not have to be transported post-calcination and thus additional steps re not required to put it in condition for transport. In the prior art, an extra milling step as well as ball milling was required to render the calcined kaolin amenable to pouring so that it could be transported. Various additives have also been added in the prior art to improve the handleability of the calcined kaolin.

If these steps are not taken, the calcined kaolin will not pour out of the transport vehicle. However, extra milling steps, post-calcination, and additives reduce the bulk of the kaolin, increase the abrasiveness and decrease the scatter and brightness. The present invention's calcination after transportation and in close proximity to the end user eliminates these extra steps, providing for a better product in terms of brightness, scatter, and less abrasiveness. In addition, the process is more economical and more efficient.

Practice of the present invention will now be illustrated by the following Examples which are deemed illustrative of both the process taught by the present invention and of the product yielded in accordance with the invention.

The invention is further explained below. In these Examples, to which the invention is not limited, the starting material was a beneficiated, hydrous kaolin. Since kaolin is a natural product, its composition is subject to routine variations, and the entire disclosure herein is subject to routine variations, depending on the uncalcined kaolin used as the starting material.

Here follows a brief description of some of the tests to which reference will be made in discussion some of the properties of the products of the present invention.

Brightness is measured by a well-known instrument made by the General Electric Company. The value of brightness, as measured by such an instrument, is conventionally designated as the "G.E. Brightness" value. The brightness of magnesium oxide, MgO, is given a value of 100. Other brightnesses are described as a percentage of the brightness of MgO. TAPPI Procedure T-646-os-75 is followed in making this measurement. All brightness values of minerals and fillers as used herein refer to block brightness values as determined in accordance with the above cited TAPPI standard procedures with a G.E. reflectance meter using light having a wavelength of about 457 nanometers or with comparable equipment and techniques. Paper brightness was measures in accordance with the Canadian Pulp and Paper Association Standard Method EJ.

Diffuse opacity was measured in accordance with TAPPI Standard Method T519 om 86. Reflectance backing opacity was measured in accordance with TAPPI Standard Method T 425 om 86.

Both the brightness characteristics of a given kaolin and the opacifying properties of the same when incorporated as a filler in paper, may be quantitatively related to a property of the filler identified as the "scattering coefficient, S" The scattering coefficient, S, of a given filler pigment is a property well known and extensively utilized in the paper technologies and art and has been the subject of numerous technical papers. An early exposition of such measurements was made by Kubelka and Munk, and is reported in *Z. Tech Physik* 12:539(1931). Further citations to the applicable measurement techniques and detailed definitions of the said scattering coefficient are set forth at numerous places in the patent and technical literature. Reference may usefully be had in this connection to U.S. Patent Nos. 4,026,762 and 4,028,173. In addition reference may further be had to *Pulp and Paper Science Technology, Vol. 2 "Paper"*, Chapter 3, by H.C. Schwalbe (McGraw-Hill Book Company, New York).

Abrasion may be measured by the well-known Valley Abrasion test method described in the Institute of Paper Chemistry Procedure 65 and as described in U.S. Patent No. 3,014,836 to *Proctor.* It may also be measured by the Breunig Abrasion test as set forth in U.S. Patent No. 4,678,517 to *Dunaway* or by the Einlehner Abrasion Test as set forth in U. S. Patent 5,011,534 to *Berube et al.* In general the measurements reported herein have been made in accordance with TAPPI Standard Abrasion techniques at 100,000 revolutions and at 15% solids.

Oil Absorption may be measured as set forth in ASTM D281-31.

Bulk density is measured as described in U.S. Patent No. 4,693,427 to *Billmoria et al*.

Particle size may be determined by sedimentations methods as published November 1954 by the Technical Association of the Pulp and Paper Industry as "T 649 SM-54", entitled *Particle-Size Distribution of Coating Clay*.

"Strike-through" is defined as 100 minus the ratio (expressed as a percent) of the reflectance of the back of the printed area to the reflectance of the unprinted sheet while both are backed by a black body.

### Example 1--

500 pounds of beneficiated hydrous kaolin was calcined in a pilot plant, indirect fired, rotary calcination furnace for 30 minutes to one hour at 1700-2000 Degrees F to yield a calcined clay product having a 92.8 brightness and a 12 Einlehner abrasion. The product has a normalized scatter of 705 and a porosity of 1.25aa cc/g standard Hg pore symmetry without ball-milling or other post calcining milling. It is noted that commercial products typically have normalized scatters on the order of 675 and porosities on the order of 1.0 cc/g. Typically coating grade calcined clays have normalized scatter on the order of 630-640 and porosities on the order of 0.8 cc/g.

**Example 2**-In further treatment of the products of Example 1, it was found that after less than 5 minutes of post calcination milling the product of the present invention has a porosity of 12-1.25 cc/g. It is noted that commercial products typically have porosities on the order of 1.0cc/g after up to 49 minutes of post calcination milling. Typically coating grade calcined clays have porosities on the order of 0.8 cc/g after up to 75 minutes of ball milling.

**Example 3**-The TAPPI Standard Abrasion at 15% solids and 100,000 revolutions of the product of Example 1 was found to be from 10-14. A typical commercial comparable product has an abrasion on the order of 15-22 and some on the order of 18-24.

**Example 4**-A low brightness product in accord with the process of Example 1 having a brightness on the order of 80+/-2 was found to have a TAPPI Standard Abrasion at 15% solids and 100,000 revolutions of 5-8. Commercially available products which are comparable have an abrasion on the order of 12-18.

**Example 5**-In a calcination at 2000 Degrees F, the TAPPI Abrasion at 15% and 100,000 revolutions was less than 15.

**Example 6**-When the calcination temperature was 1950 Degrees F, the TAPPI Abrasion at 15% solids and 100,000 revolutions is less than 12.5. Comparable products have abrasions on the order of 16-22.

**Example 7**-When the calcination temperature is 1900 Degrees F, the TAPPI Abrasion at 15% solids and 100,000 revolutions is less than 11.

**Example 8**-When the calcination temperature is 1850 Degrees F, the TAPPI Sbrasion at 15% solids and
100,000 revolutions is less than 10.

### Example 9--

500 pounds of hydrous, beneficiated kaolin having a brightness of 92.5 and a 10-15 Einlehner abrasion was calcined in a pilot plant, indirect fired, rotary calcination furnace for one hour at 1975 Degrees F to yield a product having a normalized scatter of 705 and a porosity of 1.25 cc/g. without milling.

### Example 10-

500 pounds of beneficiated, hydrous kaolin having a brightness of 80 and less than a 10 Einlehner abrasion was calcined in a pilot plant, indirect fired, rotary calcination furnace for one hour at 1500 Degrees F to yield a product having a normalized scatter of 705 and a porosity of 1.25 cc/g. without milling.

### Example 11-

A calcined clay of Example 1 was placed in a typical precoat formulation with No.2 clay at a ratio of 22% calcined and 78% No.2 clay. Dow 620 was employed at 10,15, and 20 % in a 50% solids formulation. The contrast ratio of the calcined clay blend was compared with an identical formulation containing a commercial available calcined clay. The K&N values were also established and the values regressed to a constant coat weight. The commercial product had a lower binder demand than the product of the present invention. A customer could thus use less of the product of the present invention to get the same performance or could remove binder from the coating. This factor may be particularly important for paint customers as well as for paper customers.

### Example 12--

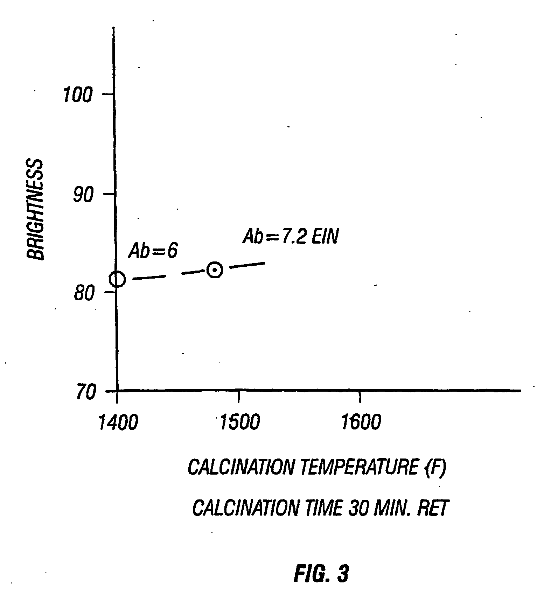

A raw feed clay having a brightness of 81 and a minus 2 micron particle size diameter(PSD) of 87% was calcined at the temperatures shown for the times shown with the indicated resulting brightness and abrasion(at 10%) as shown in **Figure 3**.

### Example 13--

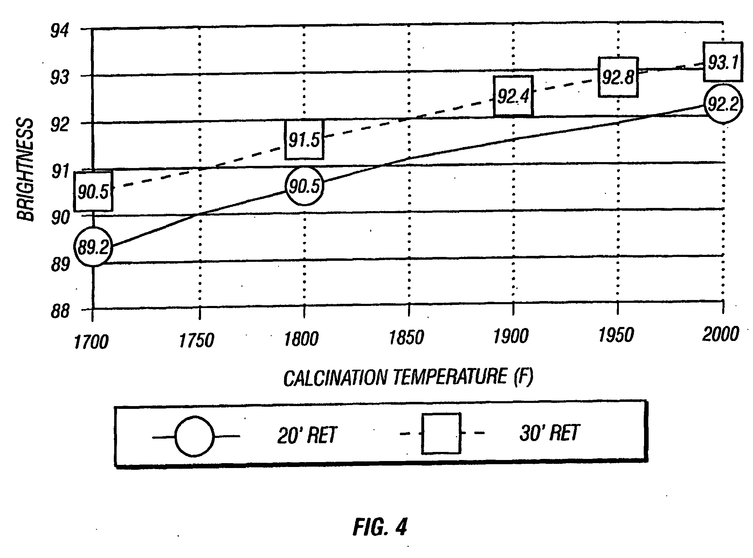

Similar results are shown in **Figure 4** for products produced from a raw feed clay having a brightness of 81 and a -2 micron particle size diameter of 99.

### Example 14--

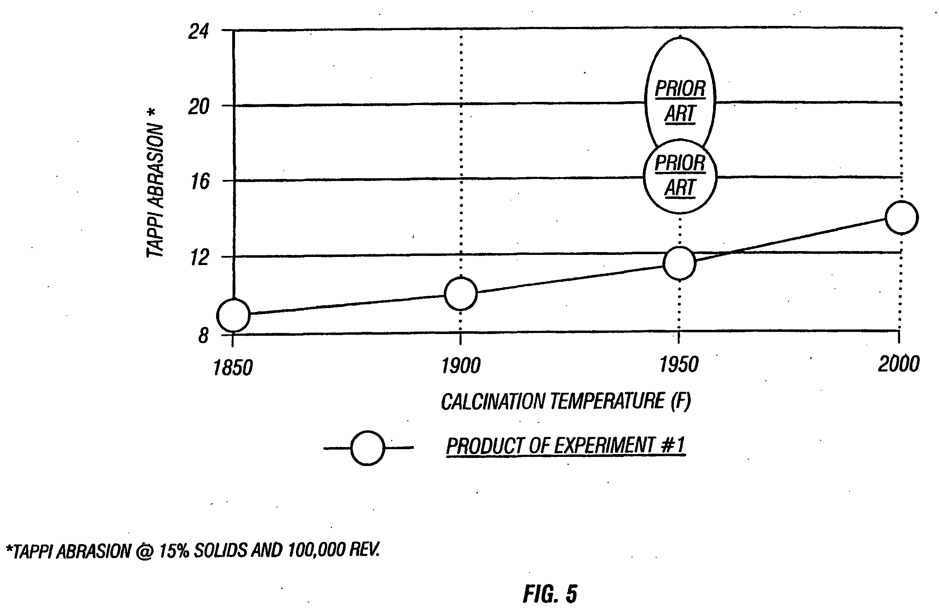

Abrasion results are shown in **Figure 5**.

Based upon the above observations, it is clear that the present invention has application in filling and coating paper, in catalysts, paints and plastics. It is also clear that the products of the present invention may be blended with precipitated and ground products such as calcium carbonates to provide useful and unique products. The possibility of blends with silica and silicate products is also clear.

Other processing possibilities are also apparent, such as the possibilities of the use of quick quench in which the product is dropped directly into make-down to provide even better scatter and brightness. The possibility of wet milling of coating grades and the use of dry high shear milling is apparent and within the scope of the present invention.

The provision of sheet bulk on the order of 1.7-1.8 cc/g. is possible in accordance with the present invention as the present invention in all regards takes advantage of the properties of the calcination or thermal processing to provide a full range of optical and physical properties.

In accordance with the present invention it is possible to use primary clays for the calcination to produce high brightness and scatter.

In summary, the enhanced optical properties attributed to the products of the present invention are related to its unique, "void-filled" particle morphology. As light energy encounters the void-filled calcined kaolin particle of the present invention, refraction, internal reflection and diffraction are increased significantly. The products of the present invention have a narrow particle size distribution of ultimate particles, those of fine particle fusion or primary aggregation and those of tertiary ( or higher ) aggregation in which fused aggregates are fused to other fused aggregates, with the formation of primary aggregates taking place primarily in the 1300-1600 Degree F range and the formation of tertiary aggregates being primarily above 1700 Degrees F.

As has been noted the products of the present invention may be used in paper to add brightness and opacity to the sheet and as an extender of the more costly titanium dioxide pigment. The fine particle size and enhanced light-scattering ability of the products of the present invention make it suitable for both filling and coating applications.

The products of the present invention may also be used to extend titanium dioxide in paint as well as for its hiding power and its ability to increase opacity, particularly in interior flat wall paints. Its microporous structure with minute air spaces scatters light well and thereby increases opacity.

The products of the present invention may also be used in rubber and plastic end uses, such as polyvinyl chloride ( PVC ), wire and cable, nylon, low-density polyethylene and in applications where its dielectric properties make it attractive.

The products of the present invention may be used in catalyst and similar applications.

The process of the present invention makes possible products approaching brightnesses of 95 with 0.5-1.5 micron PSD.

In addition to the other advantages of indirect rotary thermal processing, it should be noted that the process of the present invention includes the possible use of a variety of inert, oxidizing and reducing atmospheres which when coupled with the wide variety of possible blends, for example, with other primary or secondary clays, precipitated or ground calcium carbonates, talcs, and the like, makes the products of the present invention capable of providing a wide range of functional properties.

The process of the present invention provides the potential for reductions in total cost as well as for specific cost reductions in the manufacturing and distribution cost and in the reduction of the cost of processing chemicals.

The process of the present invention provides significant quality and environmental advantages. For example, among the possible quality, and performance improvements are improved scatter, improved brightness, improved retention, improved bulk and reduced abrasion. Environmental advantages result from the fact that the products are dioxin free, have less fugitive dust and aprovide for the possibility of zero discharge.

The present invention provides unique-tailored products options and the flexibility to permit "just-in-time"(JIT) manufacturing and varying degrees of product / process integration up to and including regional, mobile, and totally integrated manufacturing or vertical integration.

The indirect rotary calciner of the present invention provides a higher recovery( 84% vs. 72% ) and is more energy efficient than Herschoff or direct rotary calciners.

The products of the present invention have significant distribution and product handling advantages as a result of its higher bulk density of the pre-calcined material( on the order of 40-60 pounds per cubic foot as compared to 12-15 pounds per cubic foot for calcined kaolin and 25-30 pounds per cubic foot for typical densified products). Densification, of course, adds to the cost of the products requiring it.

Significant savings in chemical dispersants are possible in accordance with the present invention. Further no bactericide or suspension agents are required.

The products of the present invention have improved scatter, (705 vs. 630-680 ), improved porosity (1.25 cc/g vs. 0.8-1 .0 cc/g) and it is not necessary to ball mill for distribution, handling, or wet out. In addition, as noted , the products of the present invention have improved brightness ( with little or no milling required ), are less contaminated during calcination and distribution, and optionally may be subjected to reducing atmospheres, if desired.

The products of the present invention have improved abrasion as a result of better control of firing and pulse burners, and from the prevention of residual contamination from airflow, over-calcined products, and double calcination of dust recovery products.

In general and as used herein any thermal treatment or calcination may be done in a direct or indirect rotary calciner or in a fluidized bed and the like.

It should also be noted that various product blends may be enployed within the scope of the present invention, as for example a preferred calcium carbonate blend may be utilized.

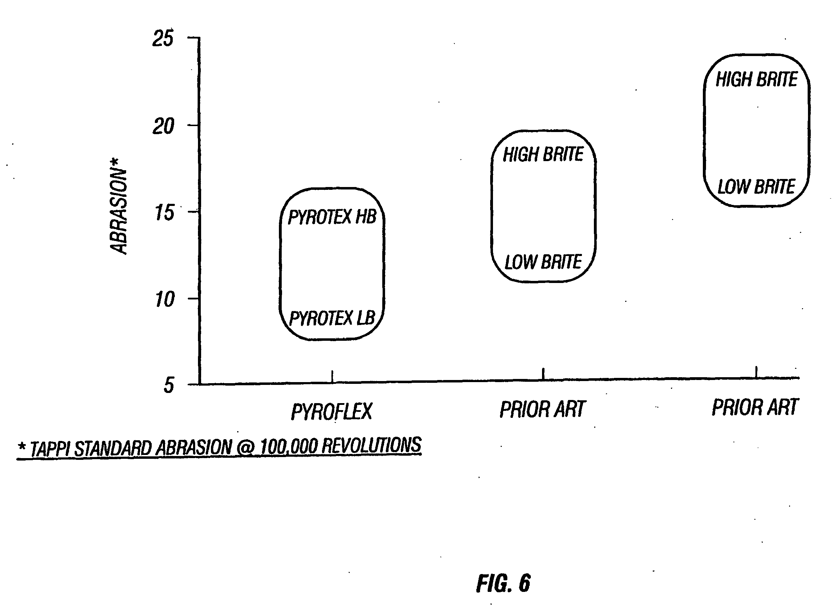

**Figure 6** illustrates the relative abrasion values of high and low brightness producets of the present invention compared with two common and well known prior art products.

The products of the present invention have improved retention as a result of improved (more positive ) zeta potentials

Improved bulk density of the present invention results from less milling, allowing the retention of larger pore radii and primary structures. The bulkier, stronger particles give rise to a bulkier sheet of paper.

In accordance with the present invention, stack gases (often slightly oxidative) may be supplemented with carbon dioxide or the like for an efficient, cheap reducing atmosphere with products of lower "b" value or shade.

The method of the present invention reduce the abrasion of a calcined product in part by use of an indirect rotary calciner which allows for better control of the thermal fusion process by use of a pulse burner system. This system --the system of the present invention-- reduces over-calcination of the product of the present invention. Other calciners, such as the vertical Herschoff, typically have a dead bed on each hearth or divider which at times becomes distributed allowing over-calcination leading to a very high abrasive material that can contaminate the product flow. Further, typically in conventional methods of calcining ( as for example in vertical Herschoff or direct rotary calciners ) very high air flow in close proximity to the product tend to produce dust and undesired material flows and recycling. The air flows may inadvertently carry calcined, semi-calcined or hydrous clays to the dust collector. The collected dust may then be reintroduced with the calcined feed causing some particles to be double calcined creating very high abrasion.

Further improvements in brightness may also be achieved by rapid or immediate product quenching.

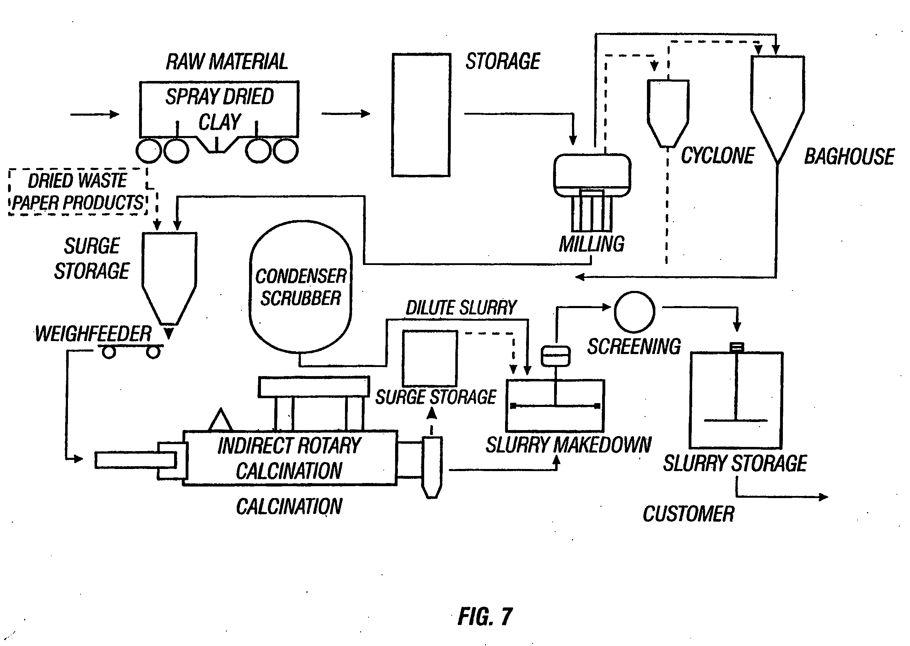

**Figure 7** illustrates the use of the present invention in the production of paper filler products.

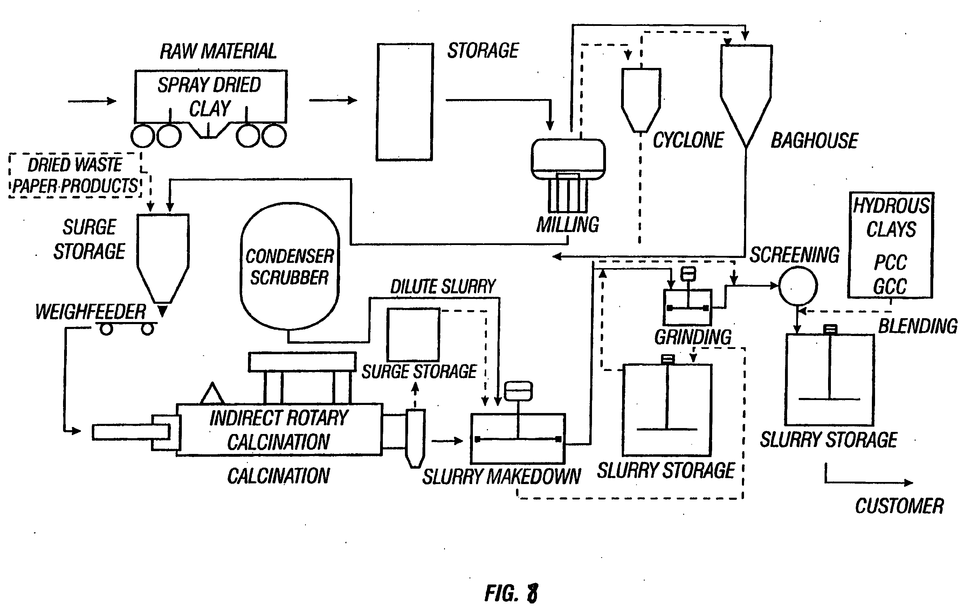

**Figure 8** illustrates the use of the present invention in the production of paper coating products.

Both Figure 7 and Figure 8 suggest additional variations not discussed in detail herein.

One such variation is known as the Pyroflex Pigment Recovery System in which thermal engineering is employed in the production, recovery and design of pigment and product designs from paper mill processing wastes. The Pyroflex Pigment (or Product) Recovery System (PPRS) is a pigment and product calcination system using state -of-the-art thermal processing technology for manufacturing low-cost and value-added pigments in proximity to the end user. By definition, this system is an axiomatic manufacturing concept that integrates a paper mill processing waste as a raw material source with advanced thermal processing and pigment calcination. By proper system design and operation, pigments are produced with the highest inherent quality and optical properties at the least cost

Various waste sludges may, of course, vary in their composition. One typical newsprint waste sludge was found to have a compound/constituent analysis as follows:

| | |
|---|---|
| Aluminum silicate(kaolinite) | 40-50 % |
| Calcium carbonate(calcite) | 4-8% |
| Silica(quartz) | 1-4% |
| Magnesium silicate(talc) | 1-4% |
| Titanium dioxide(rutile) | 1-4% |
| Titanium dioxide(anatase) | 1-4% |

with a confirming elemental analysis (reported in oxide form) as follows:

| | |
|---|---|
| Aluminum | 21% |
| Calcium | 4% |
| Magnesium | 1% |
| Silicon | 28% |
| Titanium | 3%. |

The loss on ignition at 450 Degrees C was 35% and was 42% at 900 Degrees C.

The various processes will be discussed in general terms first, followed by a more detailed discussion of certain specific steps.

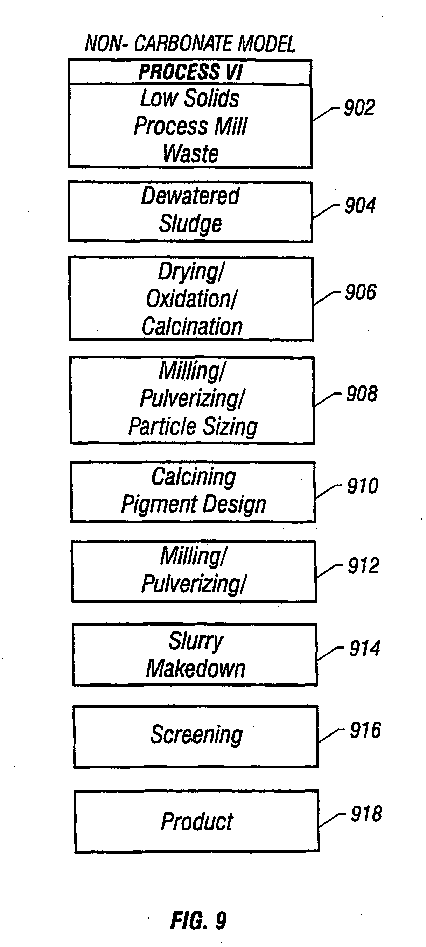

The process designated as Type VI and shown in **Figure 9** is a process designed specifically for use on slurries or sludges which have little or no carbonate content which might give rise to abrasion and other problems if heat treated for certain purposes. The process begins with a low solids process mill waste having no carbonate content as indicated at 902. This sludge is dewatered at 904. It may then be dried oxidized and calcined if desired as indicated at 906 For some product purposes the process may be considered complete at this point. However in many cases it will be desired to continue the process by milling, pulverizing and particle sizing as indicated at 908. Further calcining and specific pigment may follow as indicated at 910. For some products it will be desired to subject the product to further milling and pulverizing as shown at 912 If desired the product may then be made down as a slurry at 914 screened at 916 to produce the desired product 018 which may then be used or stored. The product recovery in this process is generally on the order of 15- 25 %.

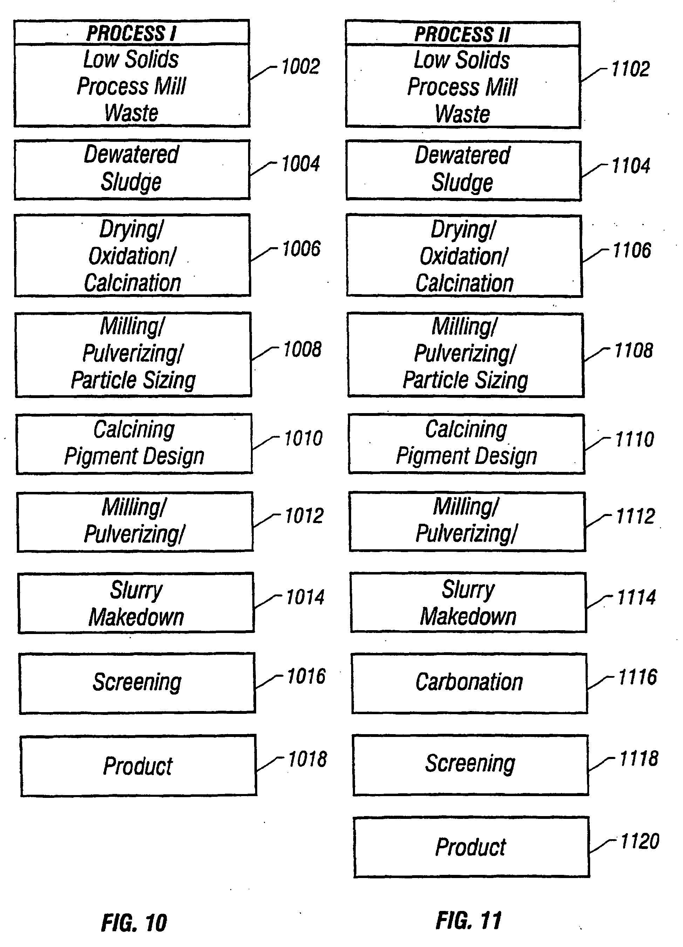

In a similar process shown in **Figure 10** and designated as a Type I process, the beginning low solids process mill waste may contain aluminun silicates, titanium dioxide and/or calcium carbonate. The beginning waste 1002 will typically be on the order of 2% solids..

It may be dewatered to approximately 35% solids at 1004 The dewatered sludge may be dried oxidized and calcined at 1006 in a direct or indirect fired rotary calciner. In many cases the reaction will be autogenous.. For some products the process may be stopped at 1006. In other cases it will be desirable to proceed with further milling, pulverizing and particle sizing at 1008. The product will then be further calcined a specific pigments designed at 1010. The desired product design may call for further milling and pulverizing as indicated at 1012. Some product designs will call for a further slurry makedown as shown at 1014 prior to screening at 1016 of the final product 1018. Typically a product recovery of from 20-40% may be obtained by this process. A routine pH adjustment to 11+ may be desired.

As shown in **Figure 11** a process designated Type II adds a carbonation step 1116 to produce a precipitated calcium product blend. A low solids process mill waste 1102 is dewatered at 1104 and then dried, oxidized and calcined at 1106. For some product designs it may be desirable to carbonate at this point with 4-8% carbon dioxide. If the carbonation is not done at this point the process continues with additional milling, pulverizing and particle sizing at 1108 and further calcination and pigment design at 1110. Further milling and pulverizing may be undertaken at 1112 and for some pigment designs the process will continue with slurry makedown at 1114 and carbonation at 1116 with a stream of 4-8% carbon dioxide. After carbonation additional screening at 1118 will yield product at 1120 which may then be used or stored.

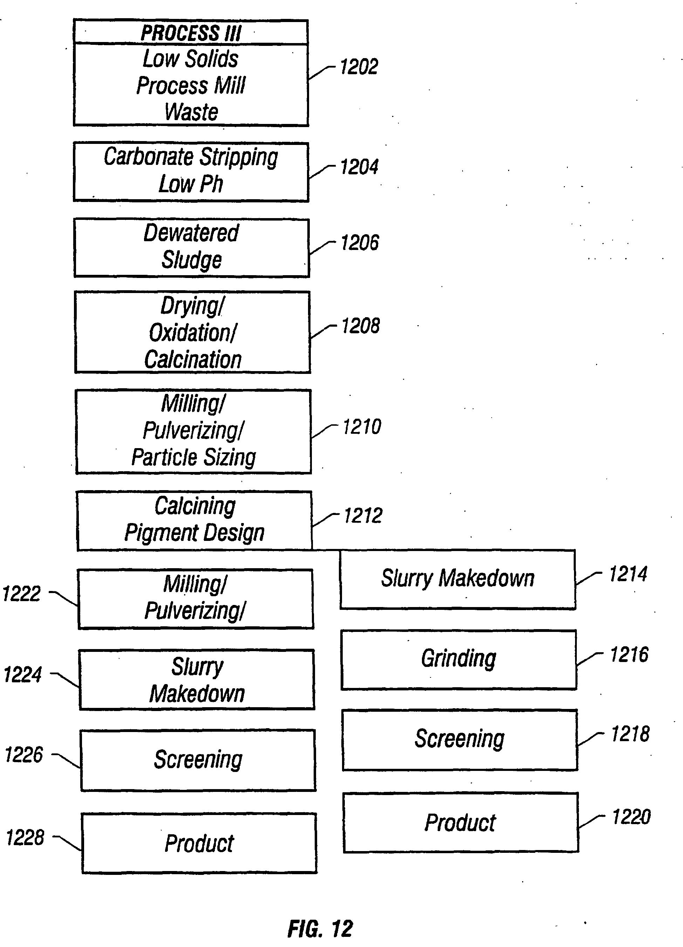

An additional process is shown in **Figure 12** and designated as a Type III process. This process is particularly design to strip carbonates from the slurry or sludge. A 2% low solids process mill waste 1202 having a typical pH of about 9 is treated with sulphuric acid at a pH of 2-4 to effect a low pH carbonate stripping at 1204 in some cases it may be desired to disperse the pigment and to adjust its pH to 7-9 by the addition of an effective amount of sodium or ammonium hydroxide. In some cases it may also be desired to add a sodium polyacrylamide or related polymer for added dispersion. The process may proceed with a dewatering of the sludge a 1206. The sludge may then be dried, oxidized and calcined at 1208 Further milling, pulverizing and particle sizing may be undertaken at 1210 prior to additional calcining and pigment design at 1212. At this point the process may diverge to a branch including slurry makedown 1214 followed by grinding 1216 and screening 1218 to produce product 1220. The alternative end process would proceed with further milling and pulverizing at 1222, followed by slurry makedown 1224 and screening 1226 to produce product 1228.

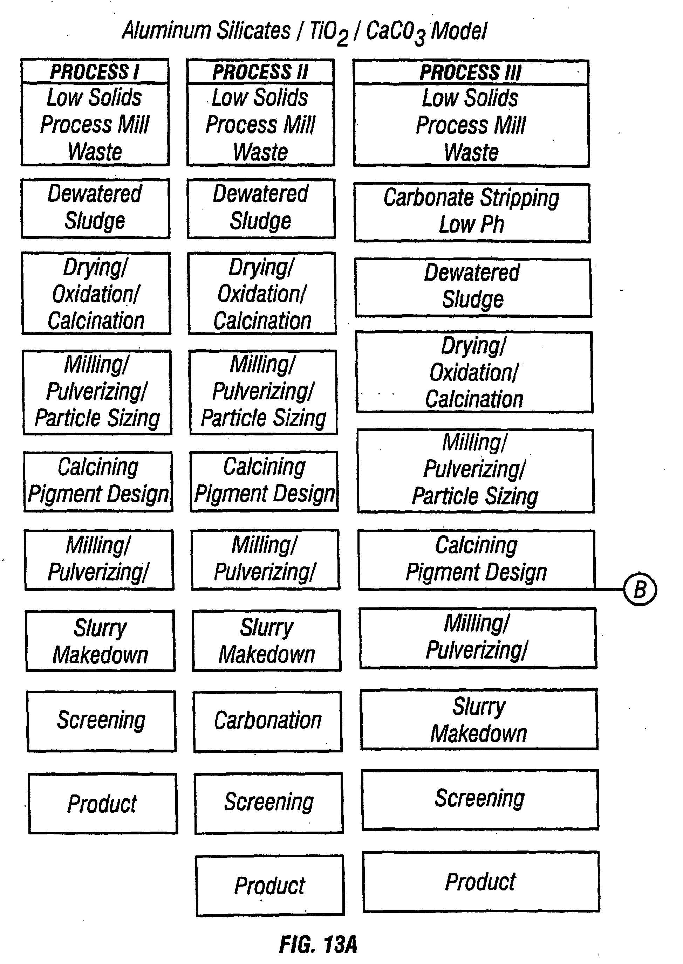

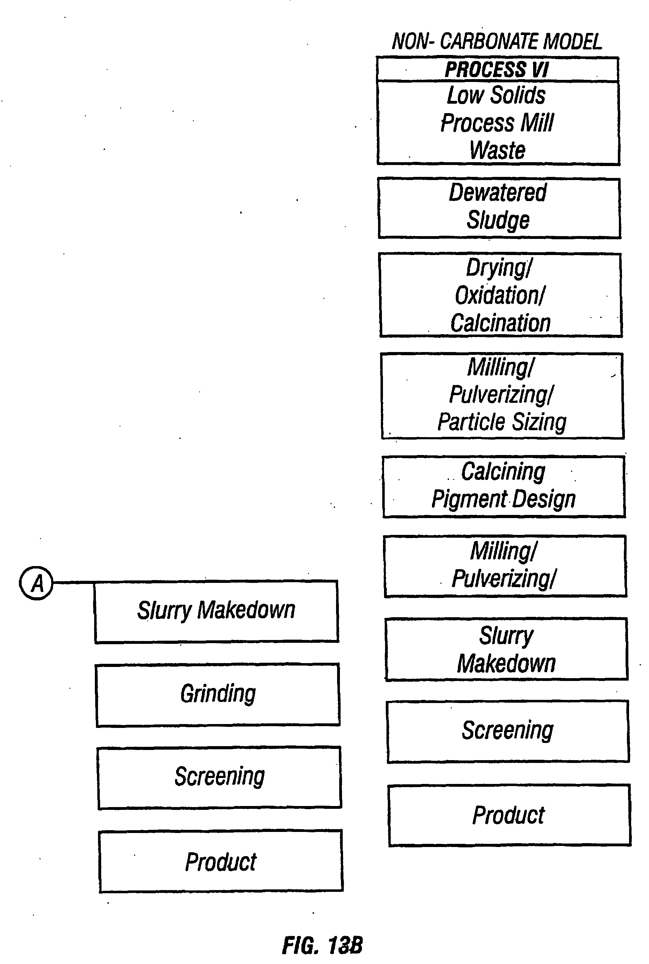

The above described processes are shown for comparison in **Figure 13**.

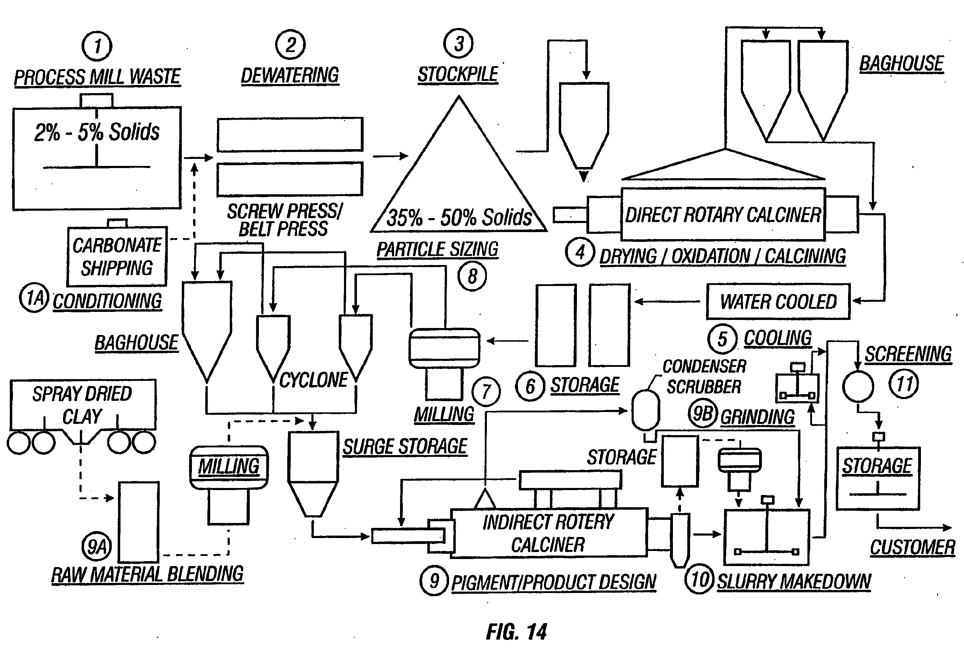

A further detailed summary of the over-all, generalized process is shown in **Figure 14**.

Turning now to the various unit operations discussed in connection with Figures 9-14 we shall address the common features unless noted to the contrary..

### Paper Mill Processing Waste(PMW):

The process mill waste will in general be such as deinked sludge, waste water, fiber cleaning residual and the like. Presently, this material is being filtered and burned for heat and electricity production, if it is used at all. However, the majority of this material is hauled away or land filled at the plant's expense.

The process mill waste consists in general of deinking sludge, residual white water, and fiber. The majority of the paper mill processing waste (e.g. 50%-75%) is paper fiber, recycled paper fiber, residual ink and approximately 25% to 50% of the paper mill processing waste is minerals including hydrous kaolin, calcined kaolin, titanum dioxide, calcium carbonate, talc, and the like.

The waste will typically have a pH of approximately 9 and be about 2% solids. Generally the paper mill processing waste is gray to grayish white/brown and is from about 2% to about 10% solids. The PH ranges from 6 to 11.

### Conditioning:

This may be optionally employed in many process designs. It is a required step for some carbonate rich waste streams such as discussed above in connection with the type III process

When calcium carbonate is present in the mill waste it is preferred to be eliminated by stripping with an acid such as sulphuric acid at a 2-4 pH. Following the stripping which serves to eliminate the source of calcium oxide which is very reactive, abrasive and has a high pH, the pH is adjusted with sodium or ammonium hydroxide and further dispersed with one or more of the well known organic dispersing agents.

As noted above calcium carbonate stripping will in general be required for some pigment/product application specifically including the process designated a type III process. In general and as shown in Figure 14 The thermal processing of calcium carbonate disassociates the mineral forming calcium oxide (CaO) which is very reactive and has a high pH. This disassociation creates problems with some pigment designs wuch as high abrasion and high pH. The elimination of this potential problem is accomplished by reducing the pH to in the range of from 2 to5 and leaving the paper mill processing waste in the low pH environment until all carbon dioxide gas is stripped from the paper mill processing waste leaving the calcium ions in solution. These excess calcium ions are substantially removed during the dewatering process.

The low pH paper mill processing waste stream is then in general neutralized using ammonia and /or sodium hydroxide and mechanically mixiing until the waste streamis fully dispersed.

### Dewatering:

The process mill waste has in general a low solids content on the order of 2-5%. To increase the solids easily and cheaply, various filtration methods may be employed. Some of the filtration technology suitable are screw presses, rotary vacuum, belt presses and the like. The filtration will increase the solids from 2%-10% to approximately 25-50% solids and reduce or eliminate undesirable soluble salts. At these solids the pulp is manageable for dryer feed The filter cake may be disintegrated or shredded, as fed to the dryer.

### Drying. Oxidation(Pyrolysis), Calcination:

The drying/oxidation/calcination processing stage is needed to produce a dry, manageable feed for efficient pulverization, milling and further calcination. This step is the primary thermal processing step. This thermal processing phase produces a dry and powdery material required for subsequent milling and particle sizing.

As used herein, drying removes all of the free water/moisture and occurs at approximately 100 Degrees C.

As used herein, oxidation is the pyrolitic processing of the organic materials, paper/pulp and wood fibers, residual ink, organic paper making additives, starch, and the like, and occurs at approximately 225 Degrees C. To 500 Degrees C. These materials are converted into carbon and ash and are either eliminated or further calcined.

As used herein and in particular with reference to this or analogous steps in a process the calcination is of the dehydroxalization type, removing the structural water from the minerals, dehydrating the pigments, disassociating any calcium carbonates present, and further burning off and oxidizing the carbon materials present. The dehydration of kaolin occurs at approximately 350 Degrees C. to 450 Degrees C.

And the disassociation of calcium carbonate occurs at approximately 510 Degrees C. to 650 Degrees C.

The paper mill processing waste stream has enough inherent BTU value to thermally drive the drying, pyrolytic, and calcining processes. This autogenious heat and thermal efficiency system can be utilized in a direct rotary calciner, fluidized bed calciner, indirect rotary furnace or the like.

The typical equipment which may be suitably employed in this step includes direct rotary calciners, flash calciners, fluidized bed calciners and the like. The process is in general autogenous and is in general conducted over the range of from 500-800 Degrees C, preferably at 600-650 Degrees C for approximately one hour.

### Pulverizing, Milling, and Particle Sizing:

The processing stage designated as pulverizing/ milling/particle sizing is needed to produce a dispensable, low residue feed with the desired particle size. As used herein these terms have the following meanings in context. The pulverizing deaglomerates the pigment, the milling reduces the residue and the particle size. The particle sizing serves to classify the pigment for optimized calciner feed.

In general, the pulverization and milling deagglomerates and reduces the particle size of the partially calcined products. In most cases the paper mill process waste stream produces products that are too coarse and has high residues.

Once the material is pulverized and milled, particle sizing is required to produce a feed to the final calcining stage that is designed to thermally process the desired pigment/product. Particle size and particle size distribution are key parameters for designing specific products/pigments.

Suitable equipment to carry out these functions includes ACM mills, CMT mills, classifiers, and the like. Equipment such as that known as PPS-Powder Process Systems Ltd. of Essex England-CMT air classification grinding mills are particularly effective at this stage.

### Calcination and Pigment/Product Design:

The calcination/product -pigment design stage is needed to produce the desired product or pigment for the end user or customer. The calcination is intended to total eliminate the structural water of the pigment and to change the pigment structure by for example thermally fuzing the kaolin particles. The product -pigment design consists of optimization of the calcination parameters such as heat and time. This step is the final thermal processing step and where the calcined pigment is thermally designed for maximum optical and functional performance. This step eliminates carbon, removes all structural water from the minerals, and thermally fuses mineral particles.

The calcining process restructures the kaolinite crystals, disassociates the calcium carbonate, and thermally fuses the mineral particles to form aggregates. The calcination will in general be carried out at between approximately 650 Degrees C. to 1000 Degrees C for varied times using direct rotary or indirect Herershuffcalciners, fluidized bed calciners or the kike. Vertide and flash calciners may also be employed as may any other suitable calciner. Some refractory and high alumina products may require temperatures of 1500 Degrees C. or more. The calcining process in general requires 15 minutes to 60 minutes for completion.

The product/pigment designs are controlled by varying the time/temperature profiles in the calciner.

A conditioner, condenser/scrubber may be use to treat the off gases of the calciner and return the condensate to the slurry makedown.

The product design may be, in general, accomplished by varying the particle size, particle size distribution, temperature and the calcination atmosphere which may be inert, oxidizing or reducing as desired in a specific instance. It is, of course, possible to add various mineral blends and components.

### Pulverizing, Milling and Particle Sizing(Post Milling):

The milling/pulverization/particle sizing processing stage at any point in the process is employed to produce a dispersed, low residue feed with desired particle size and abrasion. In general the pulverizing is intended to refer to the deaglomeration of aggregates; the mining to the reduction of residue and the particle sizing to the classification for an optimized calciner or other feed.

The pulverization and milling , in general, deagglomerates and reduces the particle size of the calcined products. In most cases, the paper mill processing waste calcined product increases in particle size during the thermal fusing process.

Once the material is pulverized and milled, pigment particle sizing is required to produce a product/pigment that meets the design specification criteria. Particle size and particle size distribution are key parameters for designing specific products/pigments.

Suitable equipment includes ACM and CMT mills and various classifiers. In some cases all of these steps may be accomplished in a single piece of equipment. In other cases it may be desirable to approach each aspect of this stage as a separate unit operation in individual pieces of equipment, all of which are conventional and well known.

### Slurry Makedown:

The slurry makedown is in general customized to the end user. Specifically, the process is customized for the end use, end product, and the location of the use.

As an on-site paper filling application, the material is mixed with water at about 35% solids, screened to remove residue and pumped directly to the paper machine.

Other applications mayrequire higher solids and a chemical additive for dispersion. For example paper filling applications will in general call for a 30-40% solid slurry, preferably typically a 35% solids slurry as a nominal figure.. A paint end user may prefer a dry pigment. A paper coating end user may utilize up to 60% solids slurries.

The makedown process is also where the hot calciner product may be directly flash cooled, wet-sand or bead ground, wet ball milled, if necessary.

The product may also be screened to remove residue.

The grinding stage may be required for paper coating applications. It may be accomplished in sand, bead or ball mills or in other suitable grinding apparatus.. Blending of other minerals is also an option for this processing step.

As further specific examples of the products of the present invention the following specific, illustrative examples are set forth:

### Example 15--

Two large portions of filtered newsprint sludge and paper mill filtered sludge were air dried and then processed through a shredder. After shredding, the material was burned using an indirect flame to remove all fibers. The material was then pulverized twice using a laboratory Micro-Pul Pulverizer equipped with a 0.01" screen.

After pulverizing, a seventy -five(75) gram sample from each lot was calcined at 600,650,700,750,800,850,900,950, and 1000 Degrees Centigrade for forty-five(45) minutes. After the 45 minute calcining period, the product was cooled and weighed to determine the percent loss on ignition.

This process was repeated until a 150 gram sample at each temperature was obtained. The calcined material was again pulverized using the laboratory Micro-Pul Pulverizer equipped with a 0.01" screen.

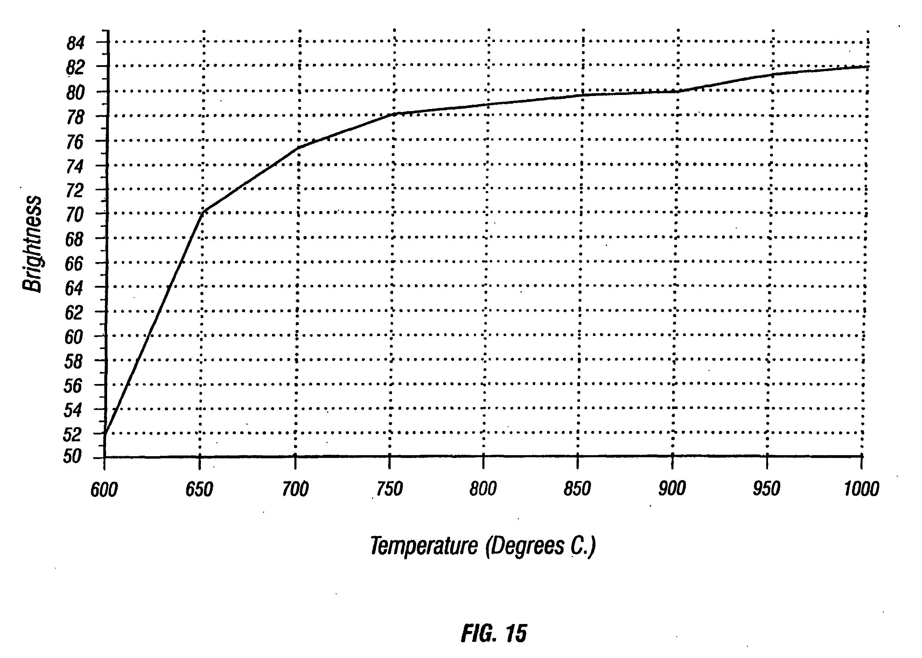

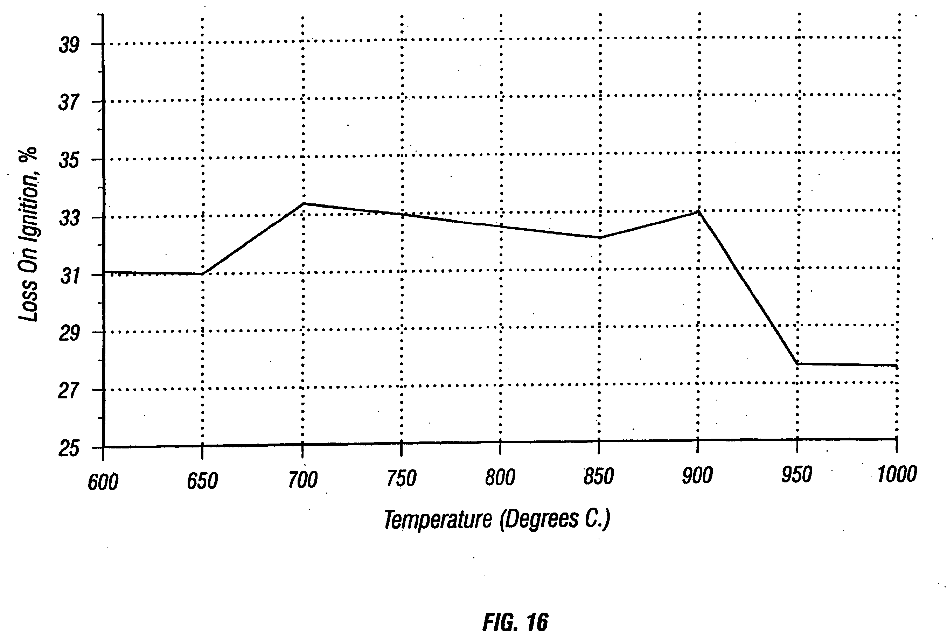

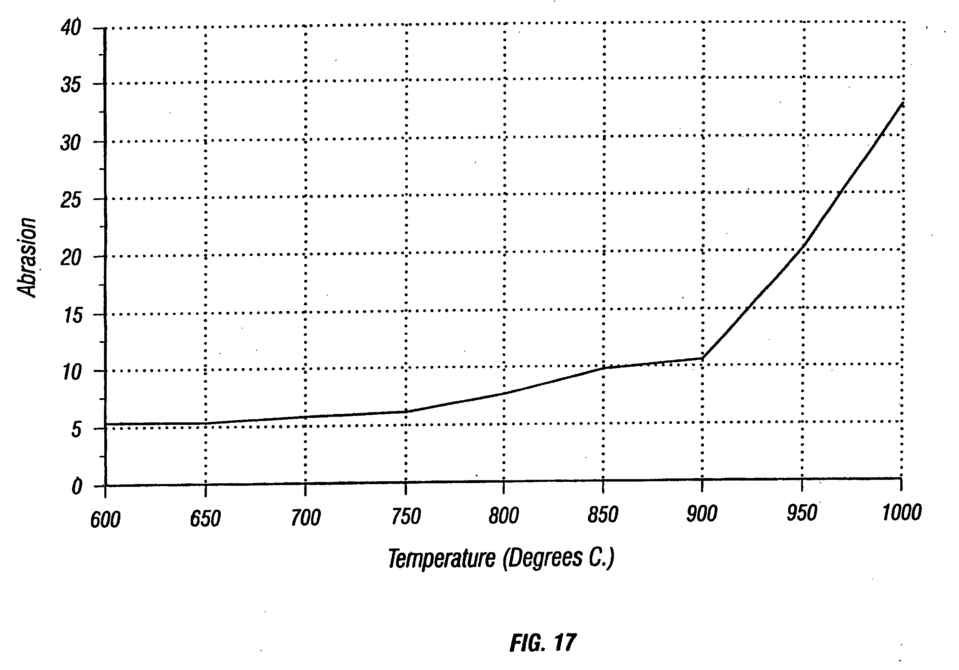

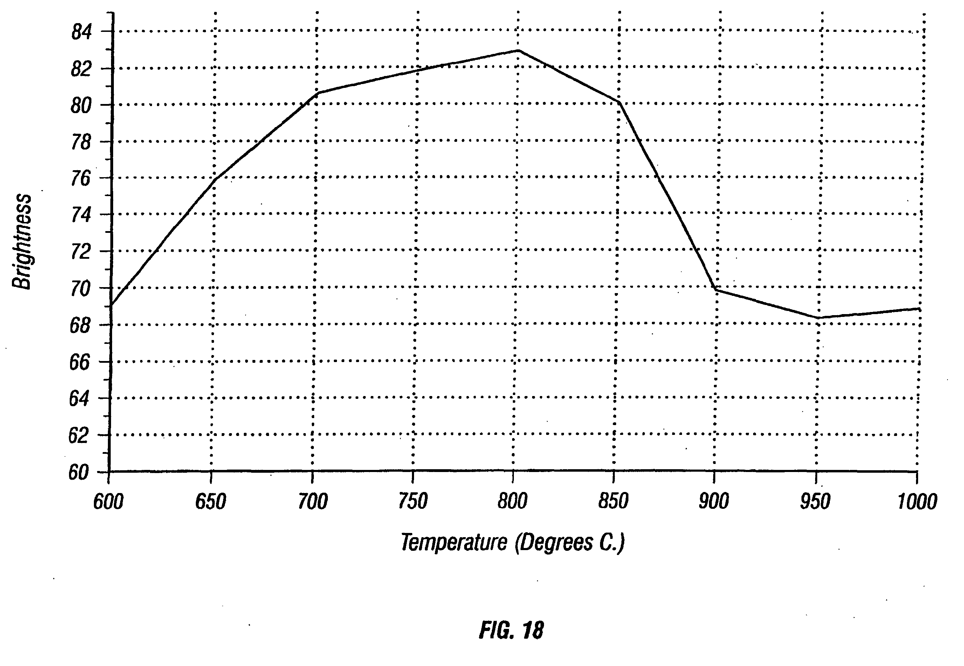

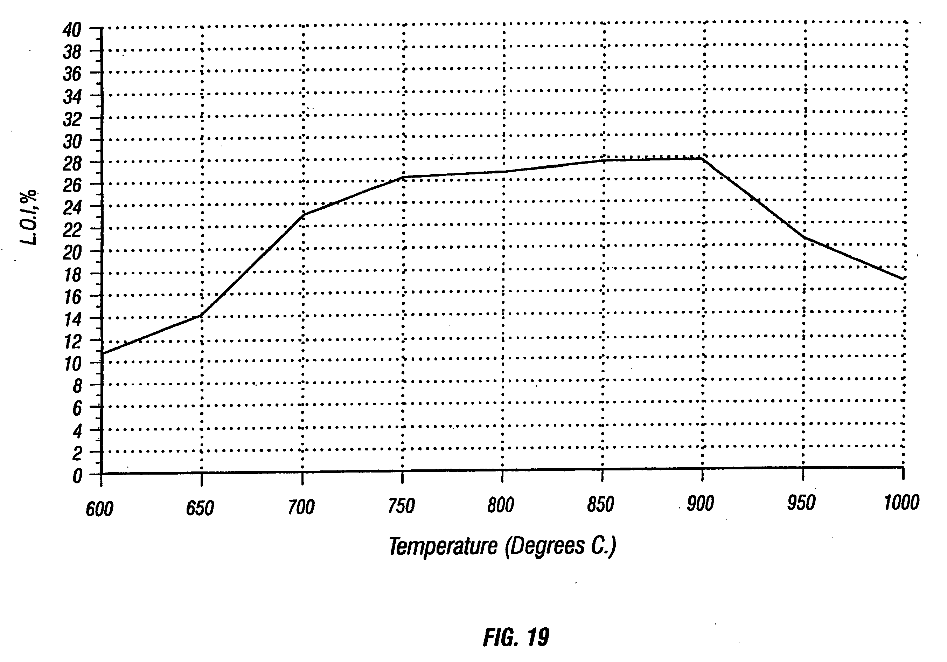

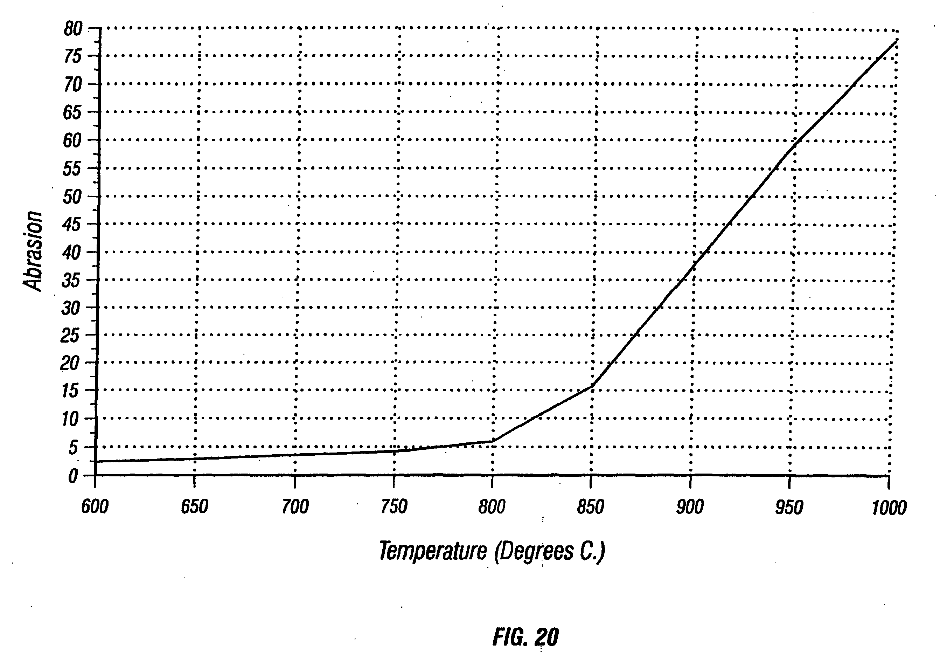

After pulverizing, the brightness and abrasion were measured The results are shown in **Figures 15-20.**

### Example 16--

A non-filtered newsprint sludge was flocced to 2.0-2.5 pH using concentrated sulfuric acid, then aged approximately 2 hours until all chemical reactions have ceased. The sample was dispersed using 10 pounds per ton sodium polyacrylate and sodium hydroxide for pH control at 7.0. After dispersion the sample was filtered using 12" diameter laboratory vacuum filters. After filtration, the filter cakes were shredded, air dried and shredded again. The material was burned using an indirect flame to remove all fibers. After burning, the material was pulverized twice using the laboratory Micro-Pul pulverizer equipped with a 0.01" screen. The material was calcined at 600 Degrees C. To burn off and remove all carbon. The remaining clay was slurried at 50% solids, fully dispersed and classified to 80% <2 microns by gravity sedimentation. The classified product was filtered and dried, then pulverized twice using the Micro-Pul. The pulverized product was calcined at 800 Degrees C. For one (1) hour, then cooled, pulverized using the Micro-Pul pulverizer to produce a product in accordance with the present invention.

### Example 17--

A paper mill sludge was burned using an indirect flame until all fibers were eliminated.

The burned sludge was then pulverized twice using the Micro-Pul pulverizer equipped with a 0.01" screen.

After pulverizing, the material was calcined one hour a 600 Degrees C. The calcined product was then pulverized twice using the Micro-Pul as above. The Brightness, particle size diameter and residue were measured The brightness was 67, the residue 0.02%, and the particle size was 79<2 microns.

The calcined product was then madedown at approximately 25% solids and dispersed using a sodium polyacrylate dispersant(C21). The pH was maintained at 9.0 using ammonia. The dispersed slurry was then screened using a 325 mesh sieve and classified to approximately 80%<2 microns using a laboratory centrifuge at 500 rpm for 7 minutes. The classified slurry was then filtered using a 12" diameter vacuum filter and dried in a fan forced oven until the moisture was less than 1%.

The dried material was then pulverized twice in the Micro-pul and calcined at 800 Degrees C. For one hour
The calcined product was then again pulverized twice and the brightness was now found to be 82.

### Example 18--

A large portion of a paper mill filtered sludge was air dried and processed through a shredder. After shredding, the material was burned using an indirect flame to remove all fibers. The material was then pulverized twice using a laboratory Micro-Pul Pulzerizer equipped with a 0.01" screen. The material was calcined at 600 Degrees C., to burn off and remove all carbon, classified to 80%<2 microns, then calcined at 800 Degrees C. for one(1) hour, cooled, and pulverized using the Micro-Pul pulverizer to produce a product in accordance with the present invention. The brightness of this product was measured and found to be 82.0. This process was continued and repeated until approximately 2000 grams of fmished product was obtained. The product was conditioned in a mass transfer reactor at approximately 15% solids for 10 minutes. Carbon Dioxide was bubbled through the bottom of the reactor for approximately 10 minutes. The treated material was filtered using a 12" diameter laboratory vacuum filter, then dried in a fan forced oven until a moisture of less than 1% was measured. The dried material was pulverized twice using the Micro-Pul Pulverizer equipped with a 0.01" screen and the TAPPI brightness was measured and fouand to be 82-86% The abrasion was measured and found to be less than 2 mg. weight loss per 174 K revolutions, the residue was measured at 0.1% by weight.

From the above examples, it was found that a competitive product that will match or exceed the calcined products on the market can be produced from waste sludge.

The products of the present invention may be used in a wide variety of ways. For example the products may be tailored as pigments for use in paper where their high opacity and scatter as well as their low cost will be see as major advantages. The pigments may also be used in paints to the same advantage.

The products of the present invention may be produced in the metakaolin range for use in concrete production.

Further the products of the present invention may be used as functional fillers in plastics, rubber, and in household and personal care products. Further use for the products may be found in the production of catalyst and catalyst supports.

## Claims

1. A thermally processed kaolin clay product having high opacity, a pore volume in excess of 1.0 cc/g and a normalized scatter in excess of 690, a TAPPI brightness in excess of 78, a TAPPI Abrasion of less than 15 at 15% solids and 100 000 revolutions, a particle size of from 40-95% less than 2 microns, a 325 residue of from 0.01 to 0.05 by calcining a dry, hydrous processed kaolin clay from clay mining operations or from a paper mill waste stream in a rotary furnace, said clay being heated to a substantially uniform, controlled temperature in the range of from 600 °C to 1100°C in said furnace for from 10 to 45 minutes, comprising:
a. transporting uncalcined, hydrous kaolin clay off site of the clay mining operations to an end user;
b. milling the uncalcined, hydrous kaolin clay in proximity to the end use site;
c. calcining the hydrous kaolin clay in a rotary furnace in the range of 600 °C to 1100 °C for from 10 to 45 minutes in physical proximity to the end use site, and
d. storing or transferring the calcined kaolin for end use.

2. A thermally processed kaolin clay product according to claim 1 having a pore volume in excess of 1.1 cc/g and a normalized scatter in excess of 690.

3. A thermally processed kaolin clay product according to claim 1 having a pore volume in excess of 0.7 cc/g and a normalized scatter in excess of 600.

4. A method of producing a thermally processed kaolin clay product having high opacity, a pore volume in excess of 1.0 cc/g and a normalized scatter in excess of 690, a TAPPI brightness in excess of 78, a TAPPI abrasion of less than 15 at 15% solids and 100 000 revolutions, a particle size of from 40-95% less than 2 microns, a 325 residue of from 0.01 to 0.05 by calcining a dry, hydrous processed kaolin clay from clay mining operations or from a paper mill waste stream in a rotary furnace, said clay being heated to a substantially uniform, controlled temperature in the range of from 600 °C to 1100 °C in said furnace for from 10 to 45 minutes, comprising:
a. transporting uncalcined, hydrous kaolin clay off site of the clay mining operations to an end user,
b. milling the uncalcined, hydrous kaolin clay in proximity to the end use site,
c. calcining the hydrous kaolin clay in a rotary furnace in the range of 600 °C to 1100 °C for from 10 to 45 minutes in physical proximity to the end use site, and
d. storing or transferring the calcined kaolin for end use.

5. A method according to claim 4 in which a calcined kaolin clay product having a pore volume in the range of 1.0 to 1.3 cc/g is produced in an indirect fired, rotary furnace.

6. A method according to claim 4 or claim 5 in which the kaolin clay is obtained from mill waste, and further comprising a step of dewatering the mill waste stream to from 35-50% solids prior to calcining.

7. A method according to claim 6 wherein any carbonate present is stripped from the process mill waste stream prior to any heat treatment.

8. A method according to any one of claims 4 to 6 wherein other raw materials are blended with the products of claim 1.

9. A method according to any one of claims 4 to 8 wherein the calcined products are made down as a slurry and subjected to grinding and screening.

10. A method according to any one of claims 4 to 9 wherein the calcined product is further subjected to pulverizing.

11. A method according to any one of claims 4 to 10 wherein the calcined product is subjected to carbonation.

## Revendications

1. Un produit d'argile kaolin traité thermiquement ayant une opacité élevée, un volume de pore excédant 1,0 cc/g et une dispersion normalisée excédant 690, une brillance TAPPI excédant 78, une abrasion TAPPI inférieure à 15 à 15 % de solides et 100 000 tours, une grosseur de particule de 40 à 95 % inférieure à 2 microns, un résidu 325 allant de 0,01 à 0,05 en calcinant une argile kaolin traitée hydratée sèche provenant d'opérations minières argileuses ou d'un flux de déchets de fabrique de papier dans un four rotatif, ladite argile étant chauffée jusqu'à une température contrôlée substantiellement uniforme entre 600 °C et 1 100 °C dans ledit four pendant 10 à 45 minutes, comportant :
a. transporter de l'argile kaolin hydratée non calcinée hors du site des opérations minières argileuses jusqu'à un utilisateur final ;
b. broyer l'argile kaolin hydratée non calcinée à proximité du site d'utilisation finale ;
c. calciner l'argile kaolin hydratée dans un four rotatif entre 600°C et 1 100 °C pendant 10 à 45 minutes à proximité physique du site d'utilisation finale, et
d. stocker ou transférer le kaolin calciné pour utilisation finale.

2. Un produit d'argile kaolin traité thermiquement selon la revendication 1 ayant un volume de pore excédant 1,1 cc/g et une dispersion normalisée excédant 690.

3. Un produit d'argile kaolin traité thermiquement selon la revendication 1 ayant un volume de pore excédant 0,7 cc/g et une dispersion normalisée excédant 600.

4. Une méthode de production d'un produit d'argile kaolin traité thermiquement ayant une opacité élevée, un volume de pore excédant 1,0 cc/g et une dispersion normalisée excédant 690, une brillance TAPPI excédant 78, une abrasion TAPPI inférieure à 15 à 15 % de solides et 100 000 tours, une grosseur de particule de 40 à 95 % inférieure à 2 microns, un résidu 325 allant de 0,01 à 0,05 en calcinant une argile kaolin traitée hydratée sèche provenant d'opérations minières argileuses ou d'un flux de déchets de fabrique de papier dans un four rotatif, ladite argile étant chauffée jusqu'à une température contrôlée substantiellement uniforme entre 600 °C et 1 100 °C dans ledit four pendant 10 à 45 minutes, comportant :
a. transporter de l'argile kaolin hydratée non calcinée hors du site des opérations minières argileuses jusqu'à un utilisateur final,
b. broyer l'argile kaolin hydratée non calcinée à proximité du site d'utilisation finale,
c. calciner l'argile kaolin hydratée dans un four rotatif entre 600 °C et 1 100 °C pendant 10 à 45 minutes à proximité physique du site d'utilisation finale, et
d. stocker ou transférer le kaolin calciné pour utilisation finale.

5. Une méthode selon la revendication 4 dans laquelle un produit d'argile kaolin calciné ayant un volume de pore dans la gamme allant de 1,0 à 1,3 cc/g est produit dans un four rotatif à chauffage indirect.

6. Une méthode selon la revendication 4 ou la revendication 5 dans laquelle l'argile kaolin est obtenue à partir de déchets de fabrique, et comportant de plus une étape de dessèchement du flux de déchets de fabrique jusqu'à entre 35 et 50 % de solides avant calcination.

7. Une méthode selon la revendication 6 dans laquelle n'importe quel carbonate présent est retiré du flux de déchets de fabrique de traitement avant tout traitement thermique.

8. Une méthode selon n'importe laquelle des revendications 4 à 6 dans laquelle d'autres matériaux bruts sont mélangés avec les produits de la revendication 1.

9. Une méthode selon n'importe laquelle des revendications 4 à 8 dans laquelle les produits calcinés sont réduits en bouillie et soumis au concassage et au criblage.

10. Une méthode selon n'importe laquelle des revendications 4 à 9 dans laquelle le produit calciné est de plus soumis à la pulvérisation.

11. Une méthode selon n'importe laquelle des revendications 4 à 10 dans laquelle le produit calciné est soumis à la carbonisation.

## Patentansprüche

1. Ein thermisch verarbeitetes Kaolinlehmprodukt mit hoher Opazität, einem Porenvolumen von mehr als 1,0 cm³/g und einer normalisierten Streuung von mehr als 690, einer TAPPI-Helligkeit von mehr als 78, einer TAPPI-Abrasion von weniger als 15 bei 15 % Feststoffen und 100 000 Umdrehungen, einer Partikelgröße von 40-95 % weniger als 2 Mikronen, einem 325-Rückstand von 0,01 bis 0,05, indem ein trockener, wasserhaltiger, verarbeiteter Kaolinlehm von Lehmgewinnungsarbeiten oder von einem Papiermühlenabfallstrom in einem Drehofen kalziniert wird, wobei der Lehm in dem Ofen für 10 bis 45 Minuten auf eine im Wesentlichen gleichmäßige, kontrollierte Temperatur im Bereich von 600 °C bis 1 100 °C erhitzt wird, wobei es Folgendes beinhaltet:
a. Transportieren von unkalziniertem, wasserhaltigem Kaolinlehm weg von der Stelle der Lehmgewinnungsarbeiten zu einem Endbenutzer;
b. Mahlen des unkalzinierten, wasserhaltigen Kaolinlehms in der Nähe von der Endbenutzungsstelle;
c. Kalzinieren des wasserhaltigen Kaolinlehms in einem Drehofen für 10 bis 45 Minuten im Bereich von 600 °C bis 1 100 °C in physikalischer Nähe zur Endbenutzungsstelle, und
d. Lagern oder Transferieren des kalzinierten Kaolins zur Endbenutzung.

2. Thermisch verarbeitetes Kaolinlehmprodukt gemäß Anspruch 1 mit einem Porenvolumen von mehr als 1,1 cm³/g und einer normalisierten Streuung von mehr als 690.

3. Thermisch verarbeitetes Kaolinlehmprodukt gemäß Anspruch 1 mit einem Porenvolumen von mehr als 0,7 cm³/g und einer normalisierten Streuung von mehr als 600.

4. Ein Verfahren zum Produzieren eines thermisch verarbeiteten Kaolinlehmprodukts mit hoher Opazität, einem Porenvolumen von mehr als 1,0 cm³/g und einer normalisierten Streuung von mehr als 690, einer TAPPI-Helligkeit von mehr als 78, einer TAPPI-Abrasion von weniger als 15 bei 15 % Feststoffen und 100 000 Umdrehungen, einer Partikelgröße von 40-95 % weniger als 2 Mikronen, einem 325-Rückstand von 0,01 bis 0,05, indem ein trockener, wasserhaltiger, verarbeiteter Kaolinlehm von Lehmgewinnungsarbeiten oder von einem Papiermühlenabfallstrom in einem Drehofen kalziniert wird, wobei der Lehm in dem Ofen für 10 bis 45 Minuten auf eine im Wesentlichen gleichmäßige, kontrollierte Temperatur im Bereich von 600°C bis 1 100 °C erhitzt wird, wobei es Folgendes beinhaltet:
a. Transportieren von unkalziniertem, wasserhaltigem Kaolinlehm weg von der Stelle der Lehmgewinnungsarbeiten zu einem Endbenutzer,
b. Mahlen des unkalzinierten, wasserhaltigen Kaolinlehms in der Nähe von der Endbenutzungsstelle,
c. Kalzinieren des wasserhaltigen Kaolinlehms in einem Drehofen für 10 bis 45 Minuten im Bereich von 600 °C bis 1 100 °C in physikalischer Nähe zur Endbenutzungsstelle, und
d. Lagern oder Transferieren des kalzinierten Kaolins zur Endbenutzung.

5. Verfahren gemäß Anspruch 4, in dem ein kalziniertes Kaolinlehmprodukt mit einem Porenvolumen im Bereich von 1,0 bis 1,3 cm³/g in einem indirekten gefeuerten Drehofen produziert wird.

6. Verfahren gemäß Anspruch 4 oder Anspruch 5, in dem der Kaolinlehm aus Mühlenabfall erhalten wird, und das ferner einen Schritt des Entwässerns des Mühlenabfallstroms vor dem Kalzinieren auf 35-50 % Feststoffe beinhaltet.

7. Verfahren gemäß Anspruch 6, wobei jedes anwesende Karbonat vor jeder Wärmebehandlung aus dem Verarbeitungsmühlenabfallstrom entfernt wird.

8. Verfahren gemäß einem der Ansprüche 4 bis 6, wobei andere Rohstoffe mit den Produkten von Anspruch 1 vermischt werden.

9. Verfahren gemäß einem der Ansprüche 4 bis 8, wobei die kalzinierten Produkte zu einem Schlicker geformt und Schleifen und Sieben unterzogen werden.

10. Verfahren gemäß einem der Ansprüche 4 bis 9, wobei das kalzinierte Produkt ferner Zermahlen unterzogen wird.

11. Verfahren gemäß einem der Ansprüche 4 bis 10, wobei das kalzinierte Produkt Karbonisierung unterzogen wird.
